(19) Europäisches Patentamt
European Patent Office
Office européen des brevets

(11) Veröffentlichungsnummer : **0 384 245 B1**

(12) **EUROPÄISCHE PATENTSCHRIFT**

(45) Veröffentlichungstag der Patentschrift : **11.08.93 Patentblatt 93/32**

(51) Int. Cl.$^5$ : **C08G 18/38,** C08G 18/76, C08G 73/06

(21) Anmeldenummer : **90102637.7**

(22) Anmeldetag : **10.02.90**

(54) **Verfahren zur Herstellung von thermoplastisch verarbeitbaren Polyhydantoinen.**

(30) Priorität : **24.02.89 DE 3905792**
**27.04.89 DE 3913856**

(43) Veröffentlichungstag der Anmeldung : **29.08.90 Patentblatt 90/35**

(45) Bekanntmachung des Hinweises auf die Patenterteilung : **11.08.93 Patentblatt 93/32**

(84) Benannte Vertragsstaaten : **DE FR GB IT**

(56) Entgegenhaltungen : **EP-A- 0 012 379**

(56) Entgegenhaltungen :
**DE-A- 1 795 804**
**DE-A- 2 017 207**
**DE-B- 1 906 492**
**US-A- 3 928 289**
**US-A- 4 108 843**
**US-A- 4 262 114**

(73) Patentinhaber : **BAYER AG**
**W-5090 Leverkusen 1 Bayerwerk (DE)**

(72) Erfinder : **Jonas, Friedrich, Dr.**
**Krugenofen 15**
**W-5100 Aachen (DE)**
Erfinder : **Merten, Rudolf, Dr.**
**Berta von Suttner-Strasse 55**
**W-5090 Leverkusen (DE)**

**EP 0 384 245 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Hydantoingruppen enthaltenden thermoplastischen Polymeren durch Umsetzung von Bis-glycinestern mit Diisocyanaten in einer ersten Stufe zu Polyharnstoffen, weiterer Umsetzung dieser Polyharnstoffe in einer zweiten Stufe mit Monoglycinestern als Kettenabbrecher und letztendlicher Cyclokondensation unter Ausbildung der Hydantoingruppen.

Verfahren zur Herstellung von Polyhydantoin-Kunststoffen durch Umsetzung von Glycinesterderivaten und Polyisocyanaten sind bereits bekannt (z.B. US 3.397.253). Diese Verfahrensweise hat nachfolgend noch zahlreiche Varianten erfahren, bei denen diese Hydantoingruppen enthaltenden Polymere durch Zugabe oder Einbau von weiteren funktionellen Gruppierungen, wie Amidgruppen, Imidgruppen oder Estergruppen variiert wurden.

Diese Polymere finden bisher im wesentlichen nur als Drahtisolierlacke oder Tränkharze für Schichtpreßstoffe Verwendung, da bei dem endgültigen Formgebungsprozeß eine weitgehende Vernetzung stattfindet. Diese Erscheinung der Vernetzung ist auf den angegebenen Anwendungsgebieten durchaus erwünscht, da die Polymere erst dann die geforderte Härte und Lösungsmittelbeständigkeit erhalten.

Eine thermoplastische Verarbeitung dieser Polymere war bisher aus den gleichen Gründen nicht möglich, da bei den Verarbeitungstemperaturen im Spritzguß oder bei der Extrusion (300-360°C) durch die stattfindenden Vernetzungsreaktionen ein unkontrollierbarer Molmassenaufbau stattfindet.

Es wurde nun gefunden, daß sich durch einen, wenn auch nur geringen Überschuß der Diisocyanatkomponente in Verbindung mit dem gezielten Einsatz von Monoglycinestern im Verfahrensablauf der Polyhydantoinherstellung Polyhydantoinpolymere herstellen lassen, die keine reaktiven, eine Vernetzung ermöglichenden Gruppen mehr aufweisen. Diese Polymere lassen sich dann nach den für die Spritzguß- bzw. Extrusionsverarbeitung typischen Bedingungen zu Formkörpern verarbeiten, ohne das ein Molmassenaufbau während der Verarbeitungsphase eintritt.

In DE-OS 24 04 741 sind zwar sogenannte "Schmelzhydantoine" beschrieben, die aber nur als Primärharz bis etwa 120°C eine stabile Schmelze aufweisen. Der Grund dafür ist in der Blockierung der reaktiven Endgruppen zu sehen, die bei Temperaturen oberhalb 150° nicht mehr wirksam ist; nach der dann eintretenden Entblockierung stehen nämlich die reaktiven Endgruppen erneut zur Verfügung und führen unter anschließender Vernetzung zu einem unlöslichen Polymer.

Aus der DE-B 19 06 492 sind Polyhydantoine bekannt, die Arylendgruppen aufweisen. Auf eine Verbesserung der Verarbeitbarkeit dieser Polymeren wurde jedoch nicht hingewiesen.

Es wurde nun ein Verfahren zur Herstellung von thermoplastisch verarbeitbaren Polyhydantoinen der Formel

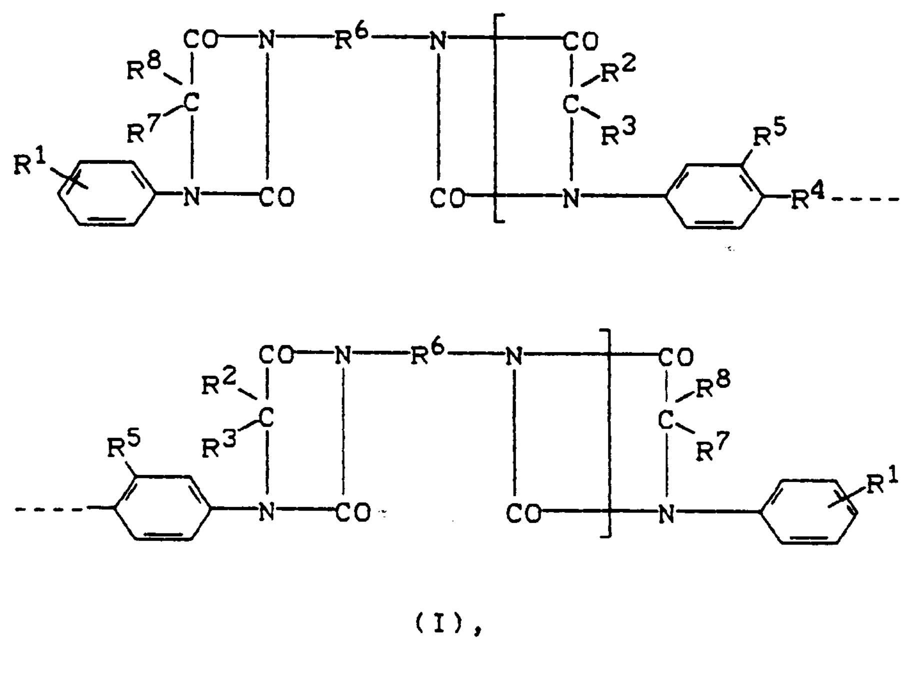

(I),

in der

$R^1$ Wasserstoff oder geradkettiges oder verzweigtes $C_1$-$C_{12}$-Alkyl bedeutet,

$R^2$ und $R^3$ unabhängig voneinander für Wasserstoff oder geradkettiges oder verzweigtes $C_1$-$C_6$-Alkyl stehen oder gemeinsam $\{CH_2\}$-$_4$ oder $\{CH_2\}_5$ bedeuten,

$R^4$ für $-CH_2-$, $-C(CH_3)_2$, -CO-, -O- oder $-SO_2-$steht,

$R^5$ Wasserstoff bedeutet oder beide $R^5$-Substituenten benachbarter Kerne ringbildendes $-SO_2-$ bedeuten,

$R^6$ den zweiwertigen Rest eines geradkettigen oder verzweigten aliphatischen $C_2$-$C_{20}$-Kohlenwasserstoffs, eines cycloaliphatischen $C_5$-$C_{10}$-Kohlenwasserstoffs, eines aromatischen $C_6$-$C_{12}$-Kohlenwasserstoffs oder eine der Gruppen

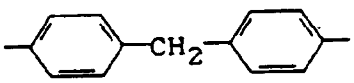 , 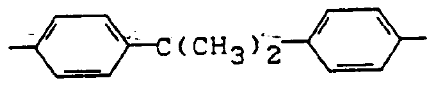 ,

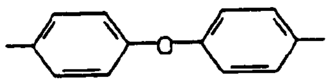 , 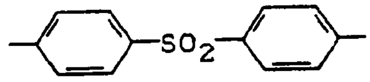

oder

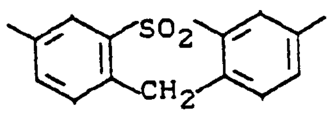

darstellt und

$R^7$ und $R^8$ unabhängig voneinander Wasserstoff oder geradkettiges oder verzweigtes $C_1$-$C_{12}$-Alkyl bedeuten,

gefunden, das dadurch gekennzeichnet ist, daß man in einer ersten Stufe Bis-glycinester der Formel

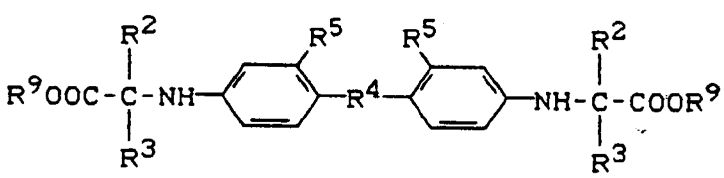 (II),

in der

$R^2$ bis $R^5$ die obige Bedeutung haben und

$R^9$ für geradkettiges oder verzweigtes $C_1$-$C_{10}$-Alkyl oder $C_6$-$C_{10}$-Aryl steht,

mit zwischen 1 und 2 Mol Diisocyanat der Formel

$$OCN\text{-}R^6\text{-}NCO \quad (III),$$

in der $R^6$ die obige Bedeutung hat,

pro Mol des Bis-glycinesters in einem flüssigen Reaktionsmedium umsetzt und nach der Bildung des Polyharnstoffs aus dem Bis-glycinester und dem Diisocyanat in einer zweiten Stufe mit einer der restlichen Menge an Isocyanatendgruppen äquivalenten Menge Monoglycinester der Formel

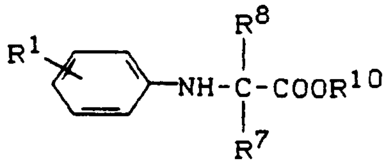

(IV),

in der

$R^1$, $R^7$ und $R^8$ die obige Bedeutung haben und

$R^{10}$ für geradkettiges oder verzweigtes $C_1$-$C_{10}$-Alkyl oder $C_6$-$C_{10}$-Aryl steht,

weiter zu einem Polyharnstoff der Formel

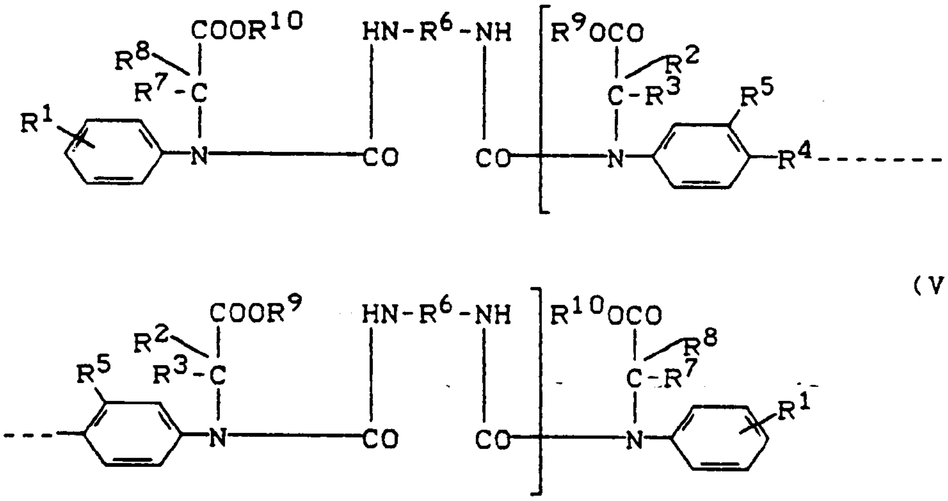

(V)

umsetzt, in der

$R^1$ bis $R^{10}$ die obige Bedeutung haben,

und schließlich unter Abspaltung von $R^9OH$ und $R^{10}OH$ die Cyclokondensation zum Polyhydantoin durchführt.

In bevorzugter Weise werden Isocyanate der Formel

$$OCN\text{-}R^{16}\text{-}NCO \quad (VI)$$

eingesetzt, in der

$R^{16}$ eine der Gruppen

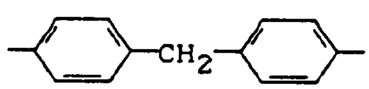

,

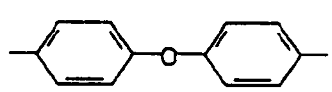

,

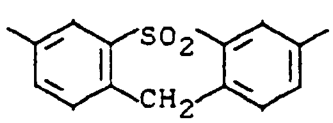

,

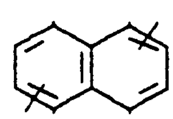

oder

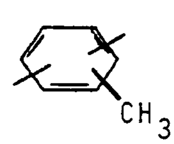

bedeutet.

In weiterhin bevorzugter Weise werden im erfindungsgemäßen Verfahren Bis-glycinester der obigen Art eingesetzt, in denen an die Stelle von $R^2$ und $R^3$ die Reste $R^{12}$ und $R^{13}$ treten, die unabhängig voneinander Wasserstoff, Methyl oder Ethyl bedeuten.

Weitere erfindungsgemäß bevorzugte Bis-glycinester sind solche, in denen $R^4$ eine der Gruppen $-CH_2-$, $-C(CH_3)_2-$ oder -O- bedeutet.

Noch weitere erfindungsgemäß bevorzugte Bis-glycinester sind solche, in denen $R^5$ Wasserstoff bedeutet.

In bevorzugter Weise werden Monoglycinester der oben beschriebenen Art eingesetzt, in denen an die Stelle von $R^7$ und $R^8$ die Reste $R^{17}$ und $R^{18}$ treten, die unabhängig voneinander Wasserstoff, Methyl oder Ethyl bedeuten.

In weiterhin bevorzugter Weise werden Monoglycinester der beschriebenen Art eingesetzt, in denen an die Stelle von $R^1$ der Rest $R^{11}$ tritt, der Wasserstoff oder $C_1$-$C_4$-Alkyl, besonders bevorzugt Wasserstoff bedeutet.

Es fällt weiterhin unter die Erfindung, von allen einzusetzenden Reaktanden Gemische mehrerer von denen, die unter die Formeln (I), (II), (III) bzw. (IV) fallen, einzusetzen.

Die erfindungsgemäßen Polyhydantoine sind durch die Einheit

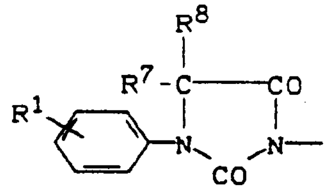

gekennzeichnet, worin $R^1$, $R^7$ und $R^8$ die oben gegebene Bedeutung haben und welche die Endgruppen für weitere unerwünschte (Vernetzungs)Reaktionen inertisiert. Desweiteren stellen die in den obigen Formeln (I) und (V) innerhalb der eckigen Klammern erscheinenden Molekülteile die immer wiederkehrenden Widerholungseinheiten des Polyhydantoins (bzw. des Polyharnstoffs als Zwischenprodukt) dar.

Es ist erfindungsgemäß wichtig, den Monoglycinester erst einzusetzen, nachdem die Reaktion zwischen dem Bis-glycinester und dem Diisocyanat abgelaufen ist. Zum Einsatz gelangen hier zwischen 1 und 2 Mol des Diisocyanats pro Mol des Bis-glycinesters, so daß immer ein, wenn auch kleiner Überschuß an Isocyanatgruppen gegenüber den Glycinestergruppen vorliegt. In bevorzugter Weise werden 1,01-1,5 Mol, besonders bevorzugt 1,02-1,3 Mol, ganz besonders bevorzugt 1,02-1,1 Mol Diisocyanat pro Mol Bis-glycinester umgesetzt. Die Umsetzungsprodukte der ersten Verfahrensstufe haben somit stets Isocyanatendgruppen. Es ist dem Fachmann geläufig, daß man durch das Einstellen des obengenannten Molverhältnisses zwischen Diisocyanat und Bis-glycinester die Kettenlänge beeinflussen kann. Ein höherer Überschuß an Diisocyanat ergibt zahlreichere aber kürzere Polymerketten mit Isocyanatendgruppen und umgekehrt. In der zweiten Stufe wird sodann so viel Monoglycinester zugesetzt, wie an restlichen Isocyanatendgruppen aus der ersten Umsetzungsstufe verblieben sind, so daß letztendlich alle Isocyanatendgruppen inertisiert sind.

Die Herstellung der als Ausgangsmaterialien zu verwendenden Glycinderivate ist im Prinzip bekannt und kann beispielsweise durch direkte Umsetzung der Diamine der Formel

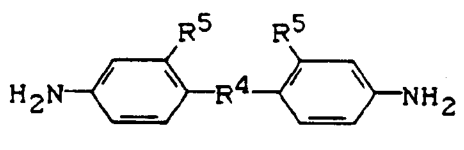
(VII),

in der $R^4$ und $R^5$ die oben gegebene Bedeutung haben,
mit Halogenessigsäure oder ihren Derivaten erfolgen.

Die Umsetzung mit Halogenessigsäure bzw. ihren Derivaten erfolgt in organischen Lösungsmitteln, beispielsweise in Ethanol, Methanol, Aceton oder Benzol, oder auch in wäßrigem Milieu unter Mitverwendung von Säurebindern, wie tertiären Aminen (Pyridin, Triethylamin und ähnlichen), überschüssigem Ausgangsamin, Alkalicarbonaten, Alkalihydrogencarbonaten, Alkali- oder Erdalkalimetalloxiden, Calciumcarbonat oder ähnlichen, dem Fachmann für diese Zwecke bekannten Stoffen.

Als Halogenessigsäure oder ihre Derivate kommen beispielsweise Chloressigsäure, Chloressigsäureester (mit Methyl, Ethyl, Phenyl oder ähnlichen als Estergruppe), α-Chlorpropionsäureester oder α-Chlorpropionsäure in Frage. Solche Verbindungen sind dem Fachmann geläufig.

Eine weitere Methode zur Herstellung der Bis-glycinester besteht in der Kondensation der Diamine (VII) mit Cyaniden, beispielsweise Natriumcyanid oder Kaliumcyanid und Oxoverbindungen (wie Formaldehyd, Aceton, Cyclohexanon und ähnlichen) unter Zusatz von Säuren; die erhaltenen Nitrile können dann in bekannter Weise zu Carbonsäuren verseift oder direkt mit dem gewünschten Alkohol und Säuren, wie HCl, in die Ester

übergeführt werden.

Weitere Verfahren bestehen in der Umwandlung von bereits hergestellten Glycinderivaten, beispielsweise in einer Veresterung der freien Säuren oder in einer Umesterung.

Die zur Herstellung der Polyhydantoine benötigten Diisocyanate sind solche der obigen Formel (III), in der $R^6$ den genannten Bedeutungsumfang hat.

Beispiele hierfür sind Polymethylendiisocyanate OCN-$(CH_2)_n$-NCO mit Werten für n von 2 bis 20, bevorzugt von 4 bis 8, gegebenenfalls alkylsubstituierte Phenylendiisocyanate, wie m-und p-Phenylendiisocyanate, Toluylen-2,4- und -2,6-diisocyanat, Ethylphenylendiisocyanate, Di- und Tri-iso-propyl-phenylendiisocyanate, Chlor-p-phenylendiisocyanate, Diphenylmethandiisocyanate, Naphthylendiisocyanate, Diphenyletherdiisocyanate oder Thioxanthen-S,S-dioxid-diisocyanate, sowie cycloaliphatische Diisocyanate, wie Cyclohexan-1,4-diisocyanat oder Isophoron-diisocyanat.

Aus den genannten Beispielen wird deutlich, daß alle in den obigen Formeln genannten Substituenten $R^1$ bis $R^{10}$ durch niedere Alkyl- und/oder Alkoxygruppen, wie Methyl, Ethyl, Propyl, Isopropyl, Butyl, isomeres Butyl, Methoxy, Ethoxy, Propoxy, Isopropoxy, Butoxy oder isomeres Butoxy, sowie durch Fluor, Chlor oder Brom substituiert sein können.

Die genannten Diisocyanate können auch in Form von Derivaten eingesetzt werden. Hierbei kommen als Derivate beispielsweise die Umsetzungsprodukte solcher Diisocyanate mit Verbindungen, wie Phenolen, Alkoholen, Aminen, Ammoniak, Disulfid oder HCl in Frage. Als einzelne Vertreter solcher Verbindungen seien beispielsweise genannt: Phenole, Kresole, Xylenole, Ethanol, Methanol, Propanol, Isopropanol, Ammoniak, Methylamin, Ethanolamin, Dimethylamin, Anilin, Diphenylamin. Ferner können auch höhermolekulare Addukte, beispielsweise von Diisocyanaten mit Polyalkoholen, wie Ethylenglykol oder Propylenglykol verwendet werden.

Bei der Herstellung von durch Polykondensation erhältlichen Polymeren ist es grundsätzlich bekannt, reaktive Endgruppen durch monofunktionelle Gruppen zu verschließen. Hierbei wird gleichzeitig das Molekulargewicht auf ein gewünschtes Maß eingestellt ("Kettenabbrecher"). Die übliche Art der Polykondensation ist hierbei die gleichzeitige Einspeisung aller Reaktionskomponenten einschließlich des Kettenabbrechers in den Reaktionsraum. Ein solches, sonst übliches Vorgehen liefert im vorliegenden Fall jedoch nur Polymere, deren Schmelzviskosität im Verlauf der Messung stark zunimmt.

Eine solche Viskositätszunahme ist offenbar auf Verzweigungsreaktionen reaktiver Endgruppen, die zu einem Molmassenaufbau führen, zurückzuführen. Solche Polyhydantoine sind für eine thermoplastische Verarbeitung unbrauchbar.

Überraschenderweise erhält man nur durch den Zusatz des Monoglycinesters (IV) erst nach der Polyharnstoffbildung aus Bis-glycinestern und Diisocyanaten Polymere mit einer Viskosität, die auch bei längerem Tempern stabil bleibt. Damit ist eine thermoplastische Verarbeitung durch Spritzguß oder durch Extrusion, bei der die Polymerschmelze längere Zeit unter dem Einfluß erhöhter Temperatur steht, möglich.

Die Gegenüberstellung der beiden geschilderten Polyhydantoine wird in Fig. 1 gezeigt, in der die Meßpunkte das Schmelzvolumen (Intrinsic Melt Volume Index) verschieden lang getemperter Polyhydantoine zeigt. Auf der Abszisse sind die Temperungszeiten in Minuten angegeben und auf der Ordinate das sich hieraus ergebende Schmelzvolumen in $cm^3$/10 Minuten. Die Werte der Kurve (1) zeigen hierbei die nahezu konstanten Werte des erfindungsgemäßen Polyhydantoins, während die Werte der Kurve (2) die stark abnehmenden Werte des Schmelzvolumens (entspricht einer stark steigenden Viskosität) von Polyhydantoinen zeigen, bei denen Kettenabbrecher bereits zu Beginn der Polyharnstoffbildung zugegeben worden waren.

Das erfindungsgemäße Verfahren wird in einem flüssigen Reaktionsmedium durchgeführt, dessen Menge 50 bis 150 Gew.-%, bezogen auf das Gewicht des zu erwartenden Polyhydantoins, beträgt. Geeignete Stoffe für ein solches flüssiges Reaktionsmedium müssen gegenüber den Reaktionspartnern inert sein. Solche Stoffe sind dem Fachmann bekannt. In bevorzugter Weise handelt es sich um cyclische, N-substituierte Säureamide wie N-Alkyl-pyrrolidone, weiterhin um Dimethylsulfoxid, Phenol, Kresole, Xylenole, aliphatische oder aromatische Kohlenwasserstoffe, aliphatische oder aromatische Halogenkohlenwasserstoffe, Ester, Ketone, offenkettige Dialkylcarbonsäureamide, kondensierte aromatische Kohlenwasserstoffe oder ein Gemisch mehrerer von ihnen. In besonders bevorzugter Weise seien N-Alkyl-pyrrolidone, Dimethylsulfoxid, Phenol, Kresole, Xylenole, Dimethylformamid, kondensierte aromatische Kohlenwasserstoffe oder ein Gemisch mehrerer von ihnen genannt, wobei die Einzelstoffe oder ein von ihnen gebildetes Gemisch zusätzlich aromatische Kohlenwasserstoffe, wie Toluol oder Xylole enthalten können. Viele dieser genannten Reaktionsmedien lösen das Polymer. Zur Isolierung des Polymers kann daher das Reaktionsmedium abdestilliert werden. Weiterhin kann das Polymer durch Zusatz eines Fällungsmittels isoliert werden. Solche Fällungsmittel sind beispielsweise aliphatische Alkohole, wie Methanol, Ethanol und Propanol oder bei mit Wasser mischbaren Reaktionsmedien auch Wasser. Eine solche Ausfällung ist problemlos, da das erfindungsgemäß hergestellte Polyhydantoin keine freien Isocyanatgruppen enthält.

Eine Reihe der genannten Reaktionsmedien, vorwiegend die Kohlenwasserstoffe oder Halogenkohlenwasserstoffe, lösen das Polymer jedoch nicht. Aus solchen Reaktionsmedien fällt daher das Polyhydantoin aus und kann durch Filtration gewonnen werden. Unter diesen Reaktionsmedien seien besonders die kondensierten aromatischen Kohlenwasserstoffe, wie Naphthalin, Anthracen und Phenanthren und ihre Derivate mit Niederalkylgruppen und/oder Halogenen genannt. In besonderer Weise seien kondensierte aromatische Stoffe der Formel

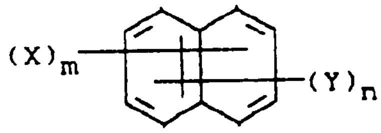

(VIII)

genannt, in der

X und Y unabhängig voneinander geradkettiges oder verzweigtes $C_1$-$C_6$-Alkyl oder $C_1$-$C_6$-Alkoxy, Phenyl oder Chlor bedeuten und

m und n unabhängig voneinander den Wert Null, Eins oder Zwei annehmen.

Das erfindungsgemäße Verfahren wird bei Temperaturen im Bereich von 0-500°C, bevorzugt 20-350°C durchgeführt. Während der gesamten Durchführung des erfindungsgemäßen Verfahrens wird von zunächst niedrigeren Temperaturwerten auf zum Schluß höhere Werte übergegangen. So wird beispielsweise die erste Stufe bei 0 - 80°C, bevorzugt bei 20 - 50°C, die zweite Stufe bei 0 - 80°C, bevorzugt bei 20 - 50°C, und die dritte Stufe bei 80 - 500°C, bevorzugt bei 80 - 300°C durchgeführt. Das erfindungsgemäße Verfahren ist weitgehend unabhängig vom äußeren Druck. In einer dem Fachmann bekannten Weise kann bei Anwendung niedriger siedender Reaktionsmedien auf einen höheren Druck zurückgegriffen werden, um ein solches Reaktionsmedium im flüssigen Aggregatzustand zu halten.

Die letzte Stufe des erfindungsgemäßen Verfahrens, nämlich die Cyclokondensation zu den Polyhydantoinen kann durch Mitverwendung von Metallalkoholaten, wie Natriummethylat, Natriumethylat, Titantetrabutylat und ähnlichen, oder tertiären Aminen, wie Triethylamin, Endoethylenpiperazin und ähnlichen, als Katalysatoren beschleunigt werden.

Die erfindungsgemäß hergestellten Polyhydantoine sind hochtemperaturbeständige Kunststoffe, die bis etwa 450°C stabil bleiben und ausgezeichnete mechanische Eigenschaften besitzen. Sie können die für Kunststoffe üblichen Zusätze, wie Füllstoffe, Pigmente, Antioxidantien, Weichmacher und andere enthalten. Ferner können andere Polymere, wie Polyester, Polyamide, Polyurethane, Polyolefine, Polyacetale, Polyepoxide, Polyimide, Polyamidimide, Polyimino-polyester und/oder Polyimido-isocyanate den erfindungsgemäß herstellbaren Polyhydantoinen zugemischt werden, wobei das Eigenschaftsspektrum weiteren Anforderungen angepaßt werden kann.

Insbesondere eignen sich die erfindungsgemäß herstellbaren Polyhydantoine zur Herstellung thermostabiler Formkörper, wie Fasern, Filamente, Folien (durch Gießtechnik oder durch Extrusion) und massive Formkörper, wie sie durch Extrusion oder Spritzgußtechnik hergestellt werden können. Die Erfindung betrifft daher weiterhin die Verwendung der erfindungsgemäß herstellbaren Polyhydantoine für solche genannte Formkörper und diese Formkörper aus den erfindungsgemäß hergestellten Polyhydantoinen selbst.

Beim Formgebungsprozeß fallen vielfach Ausschußmengen, Seitenbeschnitt (bei Folien), Spritzbäume (Spritzgußverfahren) und anderes ab. Es ist nun ein Bestreben, solche Abfälle in die formgebende Verarbeitung zu recyclisieren, da dies erhebliche Kostenersparnisse mit sich bringt. Dies ist nun aufgrund der hervorragenden thermoplastischen Eigenschaften der erfindungsgemäß hergestellten Polyhydantoine, wie sie anhand von Fig. 1 dargelegt wurden, problemlos möglich. Die Erfindung betrifft daher insbesondere die Verwendung der erfindungsgemäß hergestellten Polyhydantoine zu Formkörpern, die durch Extrusions- oder Spritzgußtechnik hergestellt werden sowie solche Formkörper selbst.

Hochtemperaturbeständige Formkörper finden unter anderem Verwendung in der Elektro- und Elektronikindustrie und in der Luft- und Raumfahrttechnik.

Beispiele

Beispiel 1

40,5 g 4,4'-Bis-(methoxycarbonyl-2-propyl)-diaminodiphenylmethan (98,4 %ig) wurden in 64 g Kresol und 20 g Toluol gelöst, und 27,03 g 4,4'-Diisocyanato-diphenylmethan wurden bei 40°C eingetragen. Nach einer

4-stündigen Rührzeit bei 35-40°C wurden 2,44 g Anilino-i-buttersäuremethylester zugesetzt und 12 Stunden bei 40°C nachgerührt. Nach Zusatz von 0,1 g Triethylendiamin wurde 6 Stunden bei 100°C cyclokondensiert. Nach dem Abkühlen wurde eine Probe entnommen und diese durch Zusatz von Kresol auf einen Feststoffgehalt von etwa 15 % verdünnt. Diese Probelösung wurde auf einer Glasplatte bei 300°C getrocknet. Der erhaltene, leicht ablösbare Polymerfilm war vollständig und klar in Methylenchlorid löslich (keine Vernetzung).
Die restliche Polymerlösung wurde mit 0,1 l Methylenchlorid verdünnt und durch Eintragen in 1 l Methanol ausgefällt. Nach dem Trocknen erhielt man 61 g weißes Polymer mit folgenden Kenndaten:

$\eta_{rel\ (25°C)}$: 1,76 (1 % in Kresol)
$T_G$: 240°C
MVI (5 kg Belastung) bei
320°C: 3,43 ml/10 Minuten
340°C: 6,17 ml/10 Minuten
IMVI (5 kg Belastung, 340°C) nach Temperung bei
5 Minuten: 12,5 ml/10 Minuten
10 Minuten: 7,2 ml/10 Minuten
15 Minuten: 7,7 ml/10 Minuten
20 Minuten: 7,1 ml/10 Minuten
MVI = Kurzzeitmessung Dauer: 5 min
IMVI = Langzeitmessung Dauer: 20 min

Beispiel 2 (zum Vergleich)

191 g 4,4'-Bis-(methoxycarbonyl-2-propyl)-diaminodiphenylmethan (98,4 %ig) und 7,7 g Anilino-i-buttersäuremethylester wurden in 256 g Kresol 70 (= techn. Kresolgemische 70 % m-Kresol) und 100 g Toluol (absolut) gelöst; hierzu wurden 125 g 4,4'-Diisocyanato-diphenylmethan bei 40°C eingetragen. Es wurde 12 Stunden bei 40°C nachgerührt. Nach Zusatz von 0,5 g DABCO wurde 6 Stunden bei 200°C cyclokondensiert. Nach dem Abkühlen wurde eine Probe entnommen und diese durch Zusatz von Kresol auf einen Feststoffgehalt von 15 % verdünnt. Diese Lösung wurde auf eine entfettete Glasplatte gestrichen und 20 Minuten bei 200°C und 10 Minuten bei 300°C getempert. Der erhaltene Polymerfilm war danach nur noch teilweise in Methylenchlorid löslich (Gelteilchen).
Die restliche Polymerlösung wurde mit 1 l Toluol verdünnt und in 6 l Methanol ausgefällt. Nach dem Trocknen erhielt man 257 g weißes Polymerpulver, das in Analogie zu Beispiel 1 folgende IMVI-Werte bei 330°C zeigte:

bei 5 Minuten: 82,1 ml/10 Minuten
bei 10 Minuten: 50,2 ml/10 Minuten
bei 15 Minuten: 16,6 ml/10 Minuten
bei 20 Minuten: 5,0 ml/10 Minuten.

Beispiel 3

371 g 4,4'-Bis-(methoxycarbonyl-2-propyl)-diaminodiphenylmethan (98,4 %ig) wurden in 600 g Kresol und 180 g Toluol gelöst; hierzu wurden 247,6 g 4,4'-Diisocyanatodiphenylmethan bei 40°C eingetragen. Nach einer 4-stündigen Rührzeit bei 35-40°C wurden 22,4 g Anilino-i-buttersäuremethylester zugesetzt und 12 Stunden bei 40°C nachgerührt. Nach Zusatz von 0,9 g Triethylendiamin wurde 6 Stunden bei 100°C cyclokondensiert. Nach dem Abkühlen wurde eine Probe entnommen und diese durch Zusatz von Kresol auf einen Feststoffgehalt von etwa 15 % verdünnt. Diese Lösung wurde auf einer Glasplatte bei 300°C getrocknet. Der erhaltene, leicht ablösbare Polymerfilm war vollständig und klar in Methylenchlorid löslich (keine Vernetzung).
Die restliche Polymerlösung wurde mit 3 l Methylenchlorid verdünnt und in 4 l Methanol ausgefällt. Nach dem Trocknen erhielt man 566 g weißes Polymer mit folgenden Eigenschaften:

$\eta_{rel\ (25°\ C)}$: 1,84 (1 % in Kresol) und
MVI: 6,78 (5 kg Belastung, 340°C).

Beispiel 4

405 g 4,4'-Bis-(methoxycarbonyl-2-propyl)-diaminodiphenylmethan (98,4 %ig) wurden in 640 g Kresol und 200 g Toluol gelöst; hierzu wurden 272,8 g 4,4'-Diisocyanatodiphenylmethan bei 40°C eingetragen. Nach einer 4-stündigen Rührzeit bei 35 bis 40°C wurden 28,31 g Anilino-i-buttersäuremethylester zugesetzt und 12 Stunden bei 40°C nachgerührt. Nach Zusatz von 1 g Triethylendiamin wurde 6 Stunden bei 200°C cyclokondensiert. Nach dem Abkühlen wurde eine Probe entnommen und diese durch Zusatz von Kresol auf einen Feststoffgehalt von etwa 15 % verdünnt. Diese Lösung wurde auf einer Glasplatte bei 300°C getrocknet. Der erhaltene, leicht ablösbare Polymerfilm war vollständig und klar in Methylenchlorid löslich (keine Vernetzung).
Die restliche Polymerlösung wurde mit 2 l Methylenchlorid verdünnt und in 10 l Methanol ausgefällt. Nach dem Trocknen erhielt man 598 g weißes Polymer mit folgenden Eigenschaften:
$\eta_{rel\ (25°C)}$: 1,85 (1 % in Kresol)
MVI (5 kg Belastung, 340°C): 3,03 ml/10 Minuten
IMVI (5 kg Belastung, 340°C) nach Temperung während

| | |
|---|---|
| 5 Minuten: | 2,66 ml/10 Minuten |
| 10 Minuten: | 2,58 ml/10 Minuten |
| 15 Minuten: | 2,01 ml/10 Minuten |
| 20 Minuten: | 1,02 ml/10 Minuten |

Beispiel 5 Spritzgußverarbeitung

Das Polymer aus Beispiel 4 wurde bei 330°C in einer Schnecke geschmolzen und anschließend granuliert. Dieses Granulat wurde mit einer Arberg Minispritzgießmaschine bei einer Temperatur von 330°C und einer Formtemperatur von 80°C zu Normkleinstäben verarbeitet. An diesen Kleinstäben wurde im Biegeversuch nach DIN 53 457 folgende Nennwerte ermittelt.

| | | |
|---|---|---|
| Biegespannung bei 3,5 %-Randfaserdehnung | 83,1 | [N/mm²] |
| Biegespannung bei Höchstkraft | 120 | [N/mm²] |
| Biege-E-Modul | 2.472 | [N/mm²] |

## Patentansprüche

1. Verfahren zur Herstellung von thermoplastisch verarbeitbaren Polyhydantoinen der Formel

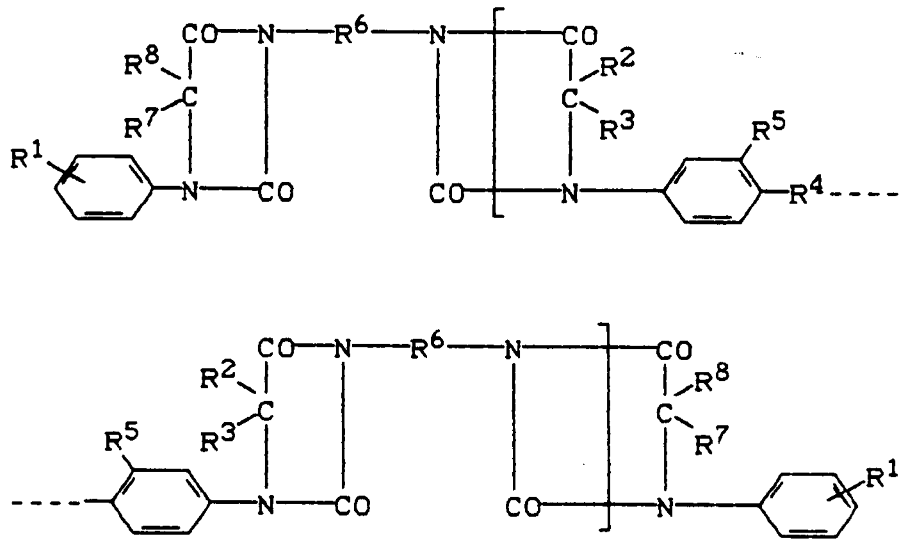

,

in der

R[1] Wasserstoff oder geradkettiges oder verzweigtes $C_1$-$C_{12}$-Alkyl bedeutet,

$R^2$ und $R^3$ unabhängig voneinander für Wasserstoff oder geradkettiges oder verzweigtes $C_1$-$C_6$-Alkyl stehen oder gemeinsam $\{CH_2\}_4$ oder $\{CH_2\}_5$ bedeuten,

$R^4$ für $-CH_2-$, $-C(CH_3)_2$, -CO-, -O- oder $-SO_2$-steht,

$R^5$ Wasserstoff bedeutet oder beide $R^5$-Substituenten benachbarter Kerne ringbildendes $-SO_2-$ bedeuten,

$R^6$ den zweiwertigen Rest eines geradkettigen oder verzweigten aliphatischen $C_2$-$C_{20}$-Kohlenwasserstoffs, eines cycloaliphatischen $C_5$-$C_{10}$-Kohlenwasserstoffs, eines aromatischen $C_6$-$C_{12}$-Kohlenwasserstoffs oder eine der Gruppen

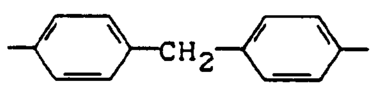

,

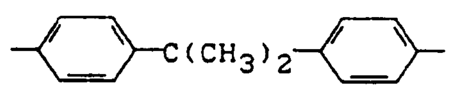

,

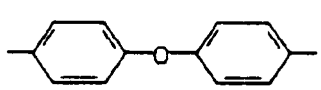

,

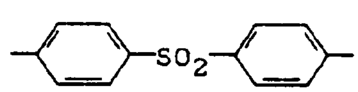

oder

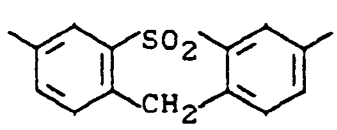

darstellt und

| | |
|---|---|
| $R^7$ und $R^8$ | unabhängig voneinander Wasserstoff oder geradkettiges oder verzweigtes $C_1$-$C_{12}$-Alkyl bedeuten, |

dadurch gekennzeichnet, daß man in einer ersten Stufe Bis-glycinester der Formel

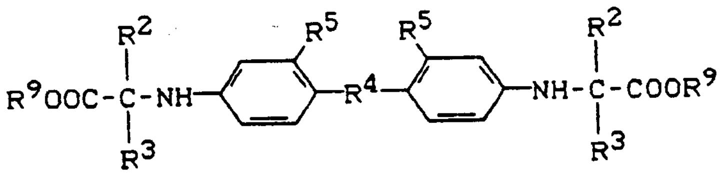

,

in der

| | |
|---|---|
| $R^2$ bis $R^5$ | die obige Bedeutung haben und |
| $R^9$ | für geradkettiges oder verzweigtes $C_1$-$C_{10}$-Alkyl oder $C_6$-$C_{10}$-Aryl steht, |

mit zwischen 1 und 2 Mol Diisocyanat der Formel

$$OCN\text{-}R^6\text{-}NCO ,$$

in der $R^6$ die obige Bedeutung hat,

pro Mol des Bis-glycinesters in einem flüssigen Reaktionsmedium umsetzt und nach der Bildung des Polyharnstoffs aus dem Bis-glycinester und dem Diisocyanat in einer zweiten Stufe mit einer der restlichen Menge an Isocyanatendgruppen äquivalenten Menge Monoglycinester der Formel

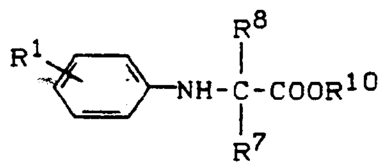

,

in der

| | |
|---|---|
| $R^1$, $R^7$ und $R^8$ | die obige Bedeutung haben und |
| $R^{10}$ | für geradkettiges oder verzweigtes $C_1$-$C_{10}$-Alkyl oder $C_6$-$C_{10}$-Aryl steht, |

weiter zu einem Polyharnstoff der Formel

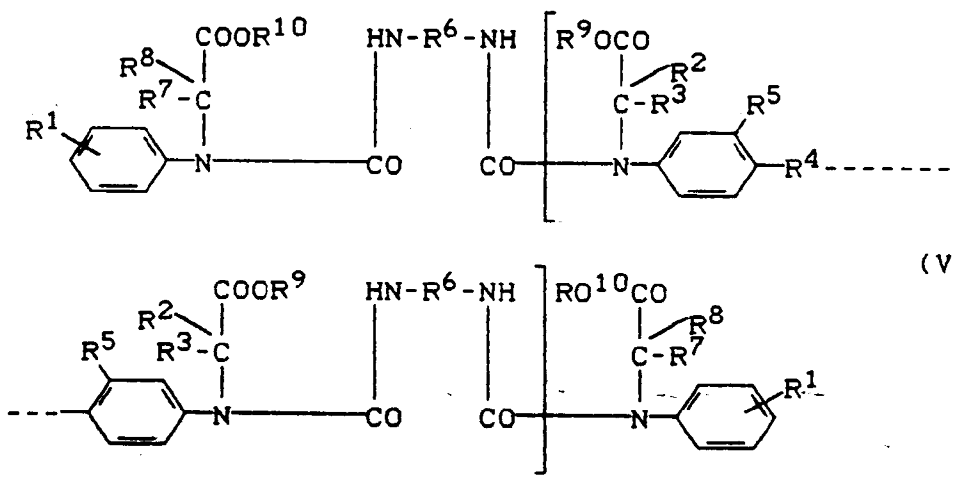

(V)

umsetzt, in der

| | |
|---|---|
| $R^1$ bis $R^{10}$ | die obige Bedeutung haben, |

und schließlich unter Abspaltung von $R^9OH$ und $R^{10}OH$ die Cyclokondensation zum Polyhydantoin durchführt.

2. Verfahren nach Anspruch 1, dadurch gekennzeichnet, daß man Isocyanate der Formel

$$OCN\text{-}R^{16}\text{-}NCO \qquad (VI)$$

eingesetzt, in der

$R^{16}$ eine der Gruppen

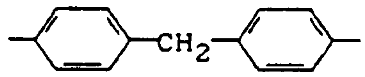 , 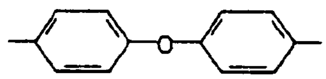 ,

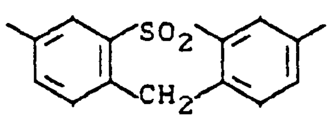 , 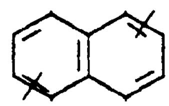 oder 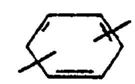

bedeutet.

3. Verfahren nach Anspruch 1, dadurch gekennzeichnet, daß man Bis-glycinester gemäß Anspruch 1 einsetzt, in denen an die Stelle von $R^2$ und $R^3$ die Reste $R^{12}$ und $R^{13}$ treten, die unabhängig voneinander Wasserstoff, Methyl oder Ethyl bedeuten.

4. Verfahren nach Anspruch 1, dadurch gekennzeichnet, daß man Monoglycinester gemäß Anspruch 1 einsetzt, in denen an die Stelle von $R^7$ und $R^8$ die Reste $R^{17}$ und $R^{18}$ treten, die unabhängig voneinander Wasserstoff, Methyl oder Ethyl bedeuten.

5. Verfahren nach Anspruch 1, dadurch gekennzeichnet, daß 1,01-1,5 Mol Diisocyanat pro Mol Bisglycinester umgesetzt werden.

6. Verfahren nach Anspruch 1, dadurch gekennzeichnet, daß als flüssiges Reaktionsmedium N-Alkyl-pyrrolidone, Dimethylsulfoxid, Phenol, Kresole, Xylenole, aliphatische oder aromatische Kohlenwasserstoffe, aliphatische oder aromatische Halogenkohlenwasserstoffe, Ester, Ketone, Dialkyl-carbonsäureamide, kondensierte aromatische Kohlenwasserstoffe oder ein Gemisch mehrerer von ihnen, kondensierte aromatische Kohlenwasserstoffe oder ein Gemisch mehrerer von ihnen oder ein Gemisch der genannten Stoffe mit aromatischen Kohlenwasserstoffen eingesetzt werden.

7. Verfahren nach Anspruch 6, dadurch gekennzeichnet, daß als flüssiges Reaktionsmedium kondensierte aromatische Kohlenwasserstoffe der Formel

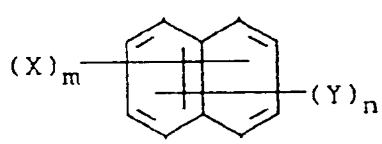

eingesetzt werden, in der

X und Y unabhängig voneinander geradkettiges oder verzweigtes $C_1$-$C_6$-Alkyl oder $C_1$-$C_6$-Alkoxy, Phenol oder Chlor bedeuten und

m und n unabhängig voneinander den Wert Null, Eins oder Zwei annehmen.

8. Verfahren nach Anspruch 1, dadurch gekennzeichnet, daß bei 0-500°C gearbeitet wird.

9. Temperaturbeständige Formkörper aus nach Anspruch 1 hergestellten Polyhydantoinen.

10. Temperaturbeständige Formkörper nach Anspruch 9, die durch Extrusions- oder Spritzgußtechnik hergestellt werden.

## Claims

1. A process for the preparation of thermoplastically processible polyhydantoins corresponding to the formula

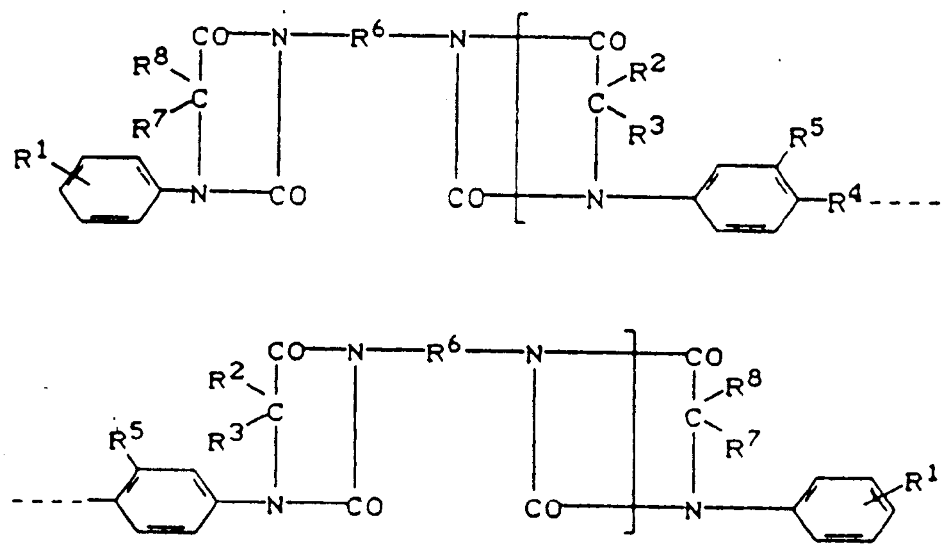

wherein

| | |
|---|---|
| $R^1$ | denotes hydrogen or straight chain or branched $C_1$-$C_{12}$-alkyl, |
| $R^2$ and $R^3$ | denote, independently of one another, hydrogen or straight chain or branched $C_1$-$C_6$-alkyl or together they stand for |

$$-(CH_2)_4-$$

| | |
|---|---|
| | or $-(CH_2)_5-$, |
| $R^4$ | stands for $CH_2$, $C(CH_3)_2$, CO, O or $SO_2$, |
| $R_5$ | denotes hydrogen or both $R^5$ substituents of adjacent nuclei are ring forming $SO_2$, |
| $R^6$ | stands for the divalent group of a straight chain or branched aliphatic $C_2$-$C_{20}$-hydrocarbon, of a cycloaliphatic $C_5$-$C_{10}$-hydrocarbon, of an aromatic $C_6$-$C_{12}$-hydrocarbon or one of the following groups |

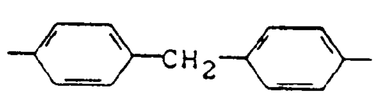 , 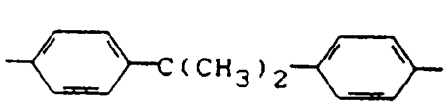 ,

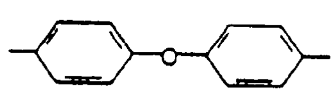 , 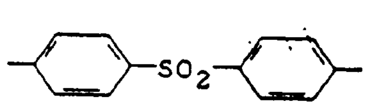

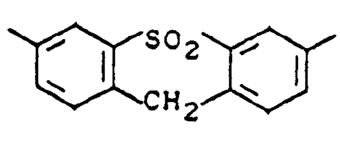

$R^7$ and $R^8$ denote, independently of one another, hydrogen or straight chain or branched $C_1$-$C_{12}$-alkyl,

characterised in that in a first step, bis-glycine esters corresponding to the formula

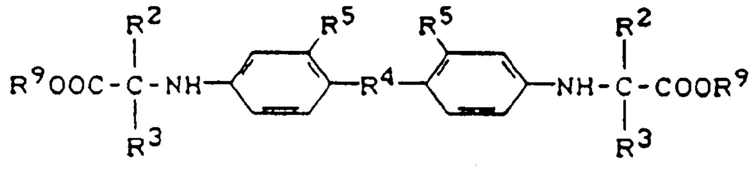

in which

$R^2$ to $R^5$ have the meanings indicated above and

$R^9$ stands for straight chain or branched $C_1$-$C_{10}$-alkyl or $C_6$-$C_{10}$-aryl

are reacted with from 1 to 2 mol of diisocyanate of the formula

$$OCN\text{-}R^6\text{-}NCO\ ,$$

wherein $R^6$ has the meaning indicated above

per mol of the bis-glycine ester in a liquid reaction medium, and after the formation of polyurea from the bis-glycine ester and the diisocyanate, the reaction product is reacted in a second stage with a quantity of a monoglycine ester corresponding to the formula

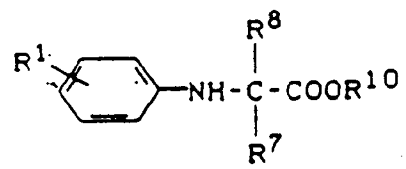

equivalent to the remaining quantity of isocyanate end groups, in which formula

$R^1$, $R^7$ and $R^8$ have the meanings indicated above and

$R^{10}$ stands for a straight chain or branched $C_1$-$C_{10}$-alkyl or $C_6$-$C_{10}$-aryl,

to form a polyurea corresponding to the formula

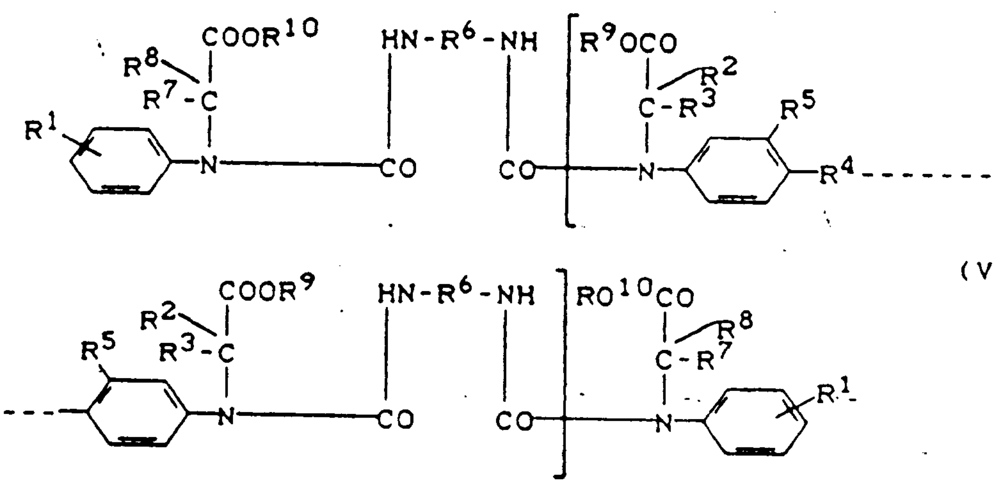

(V)

wherein $R^1$ to $R^{10}$ have the meanings indicated above,

and the cyclocondensation to form the polyhydantoin is finally carried out with elimination of $R^9OH$ and $R^{10}OH$.

2. A process according to Claim 1, characterised in that isocyanates corresponding to the formula

$$OCN\text{-}R^{16}\text{-}NCO \qquad (VI)$$

are used, in which

$R^{16}$ denotes one of the following groups

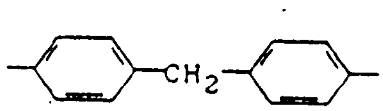

,

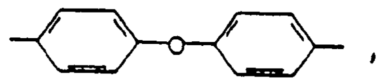

,

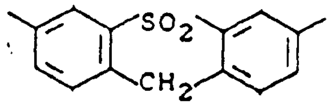

,

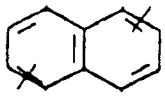

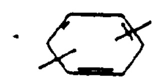

3. The process according to Claim 1, characterised in that bis-glycine esters according to Claim 1 are used in which $R^2$ and $R^3$ are replaced by the groups $R^{12}$ and $R^{13}$ which denote, independently of one another, nitrogen, methyl or ethyl.

4. The process according to Claim 1, characterised in that monoglycine esters according to Claim 1 are used in which $R^7$ and $R^8$ are replaced by the groups $R^{17}$ and $R^{18}$ which denote, independently of one another, hydrogen, methyl or ethyl.

5. The process according to Claim 1, characterised in that from 1.01 to 1.5 mol of diisocyanate are reacted per mol of bis-glycine ester.

6. The process according to Claim 1, characterised in that the liquid reaction medium used in N-alkylpyrrolidone, dimethylsulphoxide, phenol, cresols, xylenols, aliphatic or aromatic hydrocarbons, aliphatic or aromatic halogenated hydrocarbons, esters, ketones, dialkylcarboxylic acid amides, condensed aromatic hydrocarbons or a mixture of several of these, condensed aromatic hydrocarbons or a mixture of several of these or a mixture of the above-mentioned compounds with aromatic hydrocarbons.

7. The process according to Claim 6, characterised in that the liquid reaction medium used consists of condensed aromatic hydrocarbons corresponding to the formula

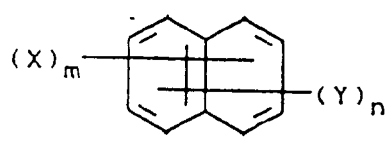

wherein

X and Y denote, independently of one another, straight chain or branched $C_1$-$C_6$-alkyl or $C_1$-$C_6$-alkoxy, phenyl or chlorine and

m and n assume, independently of one another, the value zero, one or two.

8. The process according to Claim 1, characterised in that it is carried out at from 0-500°C.

9. Temperature resistant mouldings of polyhydantoins prepared according to Claim 1.

10. Temperature resistant mouldings according to Claim 9 produced by extrusion or injection moulding.

**Revendications**

1. Procédé de production de polyhydantoïnes susceptibles de mise en oeuvre thermoplastique, de formule

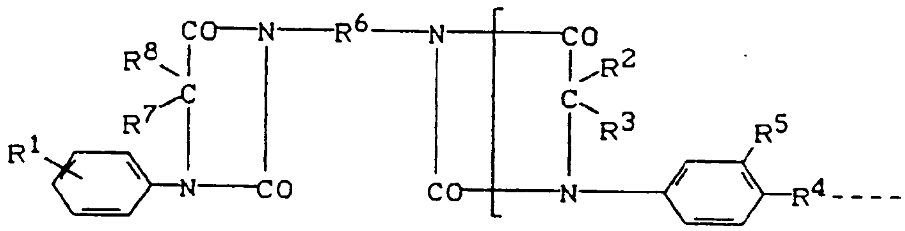

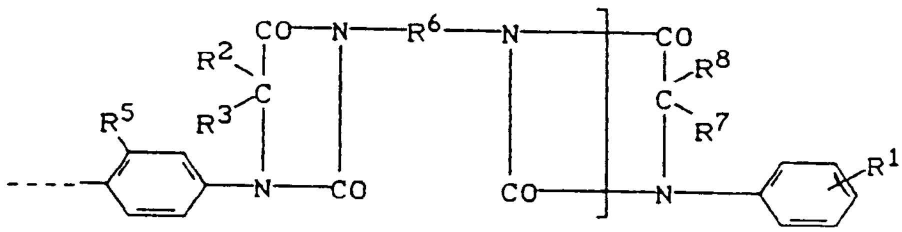

,

dans laquelle

$R^1$ représente l'hydrogène ou un groupe alkyle en $C_1$ à $C_{12}$ à chaîne droite ou ramifiée,

$R^2$ et $R^3$ représentent indépendamment l'un de l'autre l'hydrogène ou un groupe alkyle en $C_1$ à $C_6$ à chaîne droite ou ramifiée ou forment ensemble un groupe

$\{CH_2\}_4$ ou $\{CH_2\}_5$

$R^4$ est un groupe $-CH_2-$, $-C(CH_3)_2-$, -CO-, -O- ou $-SO_2-$,

$R^5$ représente l'hydrogène, ou bien les deux substituants $R^5$ de noyaux voisins désignent un groupe $-SO_2-$ cyclisant,

$R^6$ représente le reste divalent d'un hydrocarbure aliphatique en $C_2$ à $C_{20}$ à chaîne droite ou ramifiée, d'un hydrocarbure cycloaliphatique en $C_5$ à $C_{10}$, d'un hydrocarbure aromatique en $C_6$ à $C_{12}$ ou l'un des groupes

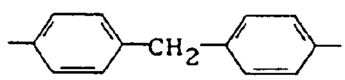 , 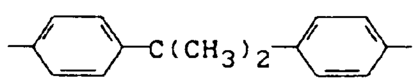 ,

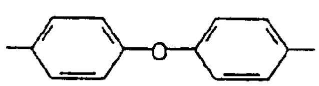 , 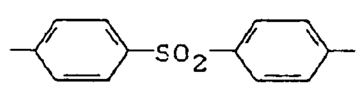

ou

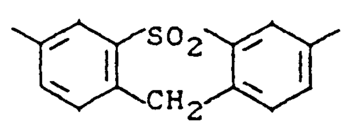

et

$R^7$ et $R^8$ représentent, indépendamment l'un de l'autre, l'hydrogène ou un groupe alkyle en $C_1$ à $C_{12}$ à chaîne droite ou ramifiée

caractérisé en ce qu'on fait réagir dans une première étape un ester de bis-glycine de formule

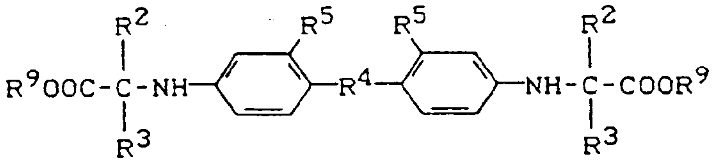

dans laquelle

$R^2$ à $R^5$ ont la définition indiquée ci-dessus et

$R^9$ est un reste alkyle en $C_1$ à $C_{10}$ à chaîne droite ou ramifiée ou un reste aryle en $C_6$ à $C_{10}$,

avec une quantité comprise entre 1 et 2 moles d'un diisocyanate de formule

$$OCN\text{-}R^6\text{-}NCO$$

dans laquelle $R^6$ a la définition indiquée ci-dessus,

par mole de l'ester de bis-glycine, dans un milieu réactionnel liquide, et après la formation de la polyurée à partir de l'ester de bis-glycine et du diisocyanate, on fait réagir dans une seconde étape, avec une quantité, équivalentes à la quantité résiduelle de groupes isocyanate, d'ester de monoglycine de formule

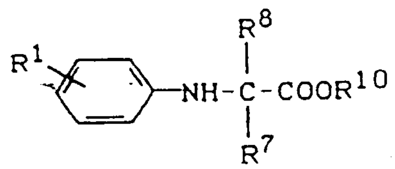

dans laquelle

$R^1$, $R^7$ et $R^8$ ont la définition indiquée ci-dessus et

$R^{10}$ est un groupe alkyle à chaîne droite ou ramifiée en $C_1$ à $C_{10}$ ou un groupe aryle en $C_6$ à $C_{10}$,

pour former une polyurée de formule

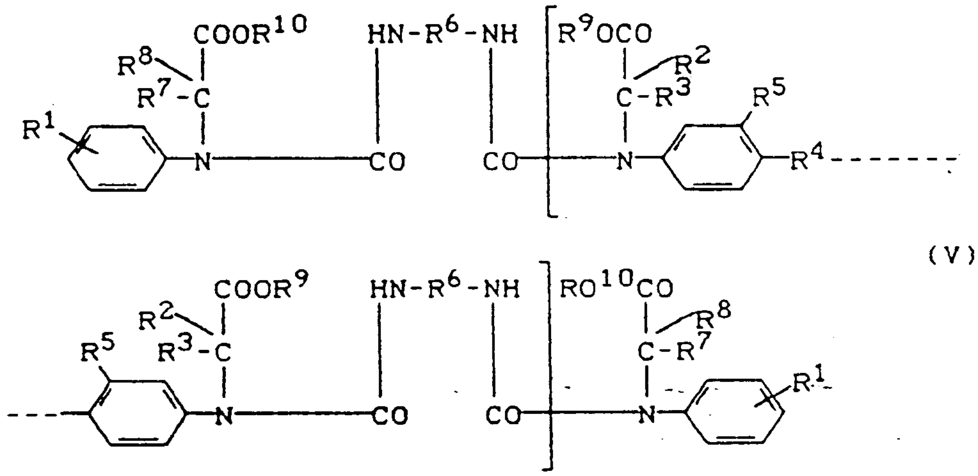

(V)

dans laquelle

$R^1$ à $R^{10}$ ont la définition indiquée ci-dessus,

et on effectue finalement avec élimination de $R^9OH$ et de $R^{10}OH$ la cyclocondensation en polyhydantoïne.

**2.** Procédé suivant la revendication 1, caractérisé en ce qu'on utilise des isocyanates de formule

$$OCN\text{-}R^{16}\text{-}NCO \quad (VI)$$

dans laquelle

$R^{16}$ représente l'un des groupes

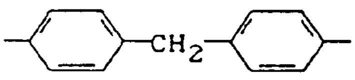 , 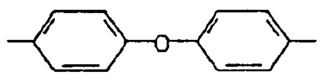 ,

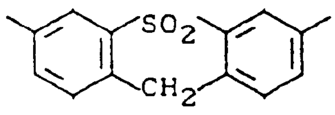 , 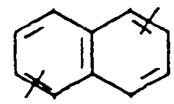 ou 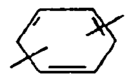

**3.** Procédé suivant la revendication 1, caractérisé en ce qu'on utilise des esters de bis-glycine suivant la revendication 1 dans lesquels apparaissent, à la place de $R^2$ et $R^3$, les restes $R^{12}$ et $R^{13}$ qui désignent indépendamment l'un de l'autre l'hydrogène, un groupe méthyle ou éthyle.

**4.** Procédé suivant la revendication 1, caractérisé en ce qu'on utilise des esters de monoglycine suivant la revendication 1 dans lesquels apparaissent, à la place de $R^7$ et $R^8$, les restes $R^{17}$ et $R^{18}$ qui désignent indépendamment l'un de l'autre l'hydrogène, un groupe méthyle ou éthyle.

**5.** Procédé suivant la revendication 1, caractérisé en ce qu'on fait réagir 1,01 à 1,5 mole de diisocyanate par mole d'ester de bis-glycine.

**6.** Procédé suivant la revendication 1, caractérisé en ce qu'on utilise comme milieu réactionnel liquide des N-alkylpyrrolidones, le diméthylsulfoxyde, le phénol, des crésols, des xylénols, des hydrocarbures aliphatiques ou aromatiques, des hydrocarbures halogénés aliphatiques ou aromatiques, des esters, des cétones, des dialkylamides d'acides carboxyliques, des hydrocarbures aromatiques condensés ou un mélange de plusieurs d'entre eux ou un mélange des substances mentionnées avec des hydrocarbures aromatiques.

**7.** Procédé suivant la revendication 6, caractérisé en ce qu'on utilise comme milieu réactionnel liquide des hydrocarbures aromatiques condensés de formule

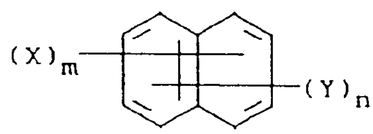

dans laquelle

X et Y représentent indépendamment l'un de l'autre un groupe alkyle en $C_1$ à $C_6$ ou alkoxy en $C_1$ à $C_6$ à chaîne droite ou ramifiée, un groupe phényle ou le chlore et

m et n prennent indépendamment l'un de l'autre la valeur zéro, un ou deux.

**8.** Procédé suivant la revendication 1, caractérisé en ce qu'on opère à 0-500°C.

**9.** Corps façonnés thermostables en polyhydantoïnes produites selon la revendication 1.

**10.** Corps façonnés thermostables suivant la revendication 9, qui sont produits par des techniques de moulage par extrusion ou par injection.

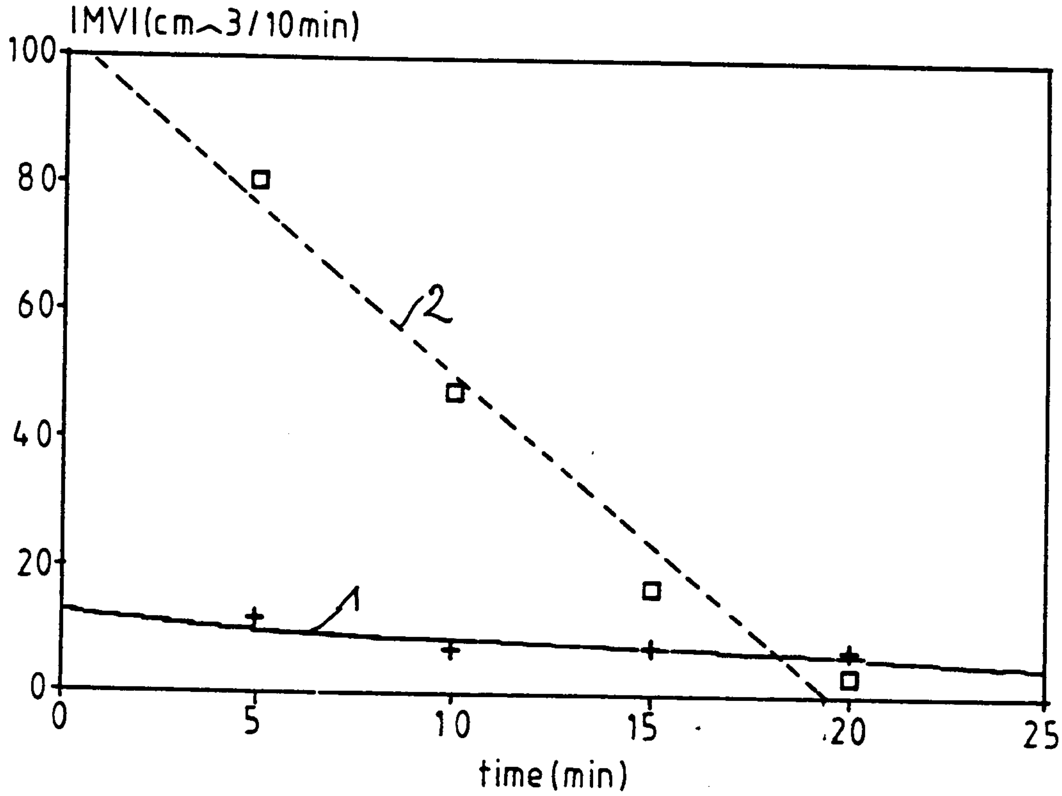


FIG.1